# EUROPÄISCHE PATENTANMELDUNG

(11) **EP 4 015 417 A1**
(43) Veröffentlichungstag der Anmeldung: **22.06.2022**
(21) Anmeldenummer: 21209159.9
(22) Anmeldetag: 18.11.2021
(51) Int. Cl.: B65G 11/20, B65G 43/00, B65G 47/19, B65G 43/10

(54) **FÖRDERBANDANLAGE UND VERFAHREN ZUM BETREIBEN EINER FÖRDERBANDANLAGE**

(30) Priorität: 15.12.2020 CH 15872020
(71) Anmelder: Agir Aggregat AG, 6474 Amsteg (CH)
(72) Erfinder: Wassermann, Carl, 8910 Affoltern am Albis (CH); Meyer, Andreas, 8910 Affoltern am Albis (CH)
(74) Vertreter: Körner, Thomas Ottmar

(57) **Zusammenfassung**

Förderbandanlage, insbesondere zum Transport von Schüttgut, umfassend
a. ein erstes Förderband (2);
b. eine Schurre (3);
c. ein zweites Förderband (12);
d. wobei die Schurre (3) dazu eingerichtet ist, vom ersten Förderband zugeführtes, insbesondere abgeworfenes, Fördermaterial dem zweiten Förderband zuzuleiten;
e. eine Tragkonstruktion (5), an oder auf welcher die Schurre (3) in definierter Position relativ zum ersten und/oder zweiten Förderband gelagert ist;
f. eine Messeinrichtung (7) zur Ermittlung einer zwischen Schurre und Tragkonstruktion wirkenden Kraft.

## Beschreibung

Die Erfindung bezieht sich auf den Transport von Fördermaterial insbesondere in Form von Schüttgütern, z.B. im Berg- oder Tagebau. Sie betrifft eine Förderbandanlage zum Transportieren von Material, sowie ein Verfahren zum Betreiben einer Förderbandanlage.

### Hintergrund der Erfindung

Allgemein sind Förderbandanlagen bekannt. Diese Anlagen bestehen praktisch immer aus einem endlos verbundenen flachen Förderbandgurt, der auf an einer Tragkonstruktion befestigten Tragrollen beweglich angeordnet ist, einer angetriebenen Trommel, als Antriebstrommel bezeichnet, an einem Ende und einer Umlenktrommel am zweiten Ende, wobei der Gurt zwischen Antriebstrommel und Umlenktrommel umläuft, wenn sich die Anlage in Betrieb befindet. Daneben können weitere Trommeln, wie Spanntrommeln oder andere Elemente wie Spannvorrichtungen zum Einsatz kommen. Auf den oberen Teil des Förderbandgurtes, auch als Obergurt bezeichnet, wird durch eine separate Vorrichtung das zu fördernde Material aufgegeben. Der Obergurt bewegt sich, angetrieben von der Antriebstrommel und fördert so das auf ihm liegende Material. In der Regel bewegt sich der Obergurt in einer Richtung von der Umlenktrommel zur Antriebstrommel, der darunter liegende Gurt, auch als Untergurt bezeichnet, in einer Richtung von der Antriebstrommel zur Umlenktrommel. Grundsätzlich kann eine Förderbandanlage bei geeigneter Geometrie auch in die umgekehrte Richtung betrieben werden.

Der Abwurf des Materials auf dem Obergurt geschieht praktisch in allen Fällen über die Trommel. Das Material fällt dort in einer parabelförmigen Bewegung nach vorne, weg von der Trommel und nach unten. Das Material kann anschliessend unterhalb oder vor der Trommel einen Haufen bilden, solange es sich um Schüttgut handelt.

Wird das Material jedoch nach dem Abwurf vom zuführenden Förderband auf ein weiteres Förderband übergeben, so wird zwischen den beiden Förderbändern, also zwischen dem zuführenden Band und dem nachfolgenden Band, meist eine Übergabekonstruktion angeordnet. Dieses Bauteil wird in der Regel als Schurre bezeichnet.

Die Schurre verhindert den unkontrollierten Verlust von gefördertem Material, indem der Materialstrom innerhalb der geschlossenen oder teilweise geschlossenen Konstruktion während der Übergabe des Materials vom zuführenden Förderband beispielsweise auf das nachfolgende Förderband kanalisiert wird. Das geförderte Material verlässt die Schurre durch eine Ausgangsöffnung im unteren Bereich.

Bei unvorhergesehenen Störungen beispielweise durch zu grosse Teile oder Komponenten und/oder Fremdmaterial (wie beispielsweise Wurzelwerk, Äste oder Holzbalken) im Materialstrom, kann die Ausgangsöffnung und/oder der Materialfluss durch die Schurre blockiert, reduziert und/oder behindert werden. In bestimmten Fällen kann der Materialfluss komplett zum Erliegen kommen.

Tritt eine Reduktion, Behinderung oder Blockierung des Materialflusses auf, so kann die Schurre überfüllt werden, wenn das zuführende Band, insbesondere über einen längeren Zeitraum, mehr Material in die Schurre fördert, als am Ausgang der Schurre abgeführt wird. Ein solcher längerer Zeitraum kann bei einem leistungsfähigen zuführenden Band im Bereich von mehreren Sekunden bis mehreren zehn Sekunden liegen, soweit eine Förderleistung des zuführenden Bandes annähernd einer nominellen Förderleistung entspricht. Eine überfüllte Schurre ist grundsätzlich zu vermeiden oder auszuschliessen, da dabei in der Regel eine Reihe von Problemen entstehen können. So können bei schwerem Material und/oder einer Schurre mit grossen Innenvolumen statische Problem entstehen, die die Konstruktion mechanisch beschädigen und/oder einen Unfall hervorrufen können. Auch andere Probleme wie eine Entmischung des Materials oder ein Fehlen des Materials in der nachfolgenden Einrichtung können ebenfalls in der Folge auftreten.

Im Falle einer Reduktion, Behinderung oder Blockierung des Materialflusses wird zur Verhinderung der Überfüllung der Schurre, wenn möglich, das zuführende Förderband abgestellt bzw. angehalten. Dazu wird der Füllstand in der Schurre gemessen, meist durch Näherungssensoren mit digitalem oder analogen Messausgängen. Diese Sensoren können beispielsweise Ultraschallgeräte oder Radargeräte sein. Auch mechanische Sensoren werden eingesetzt, die bei normalem Betrieb frei senkrecht hängen und bei Überfüllung der Schurre aus der Normalposition ausgelenkt werden. Es können pro Schurre mehrere Sensoren zum Einsatz kommen.

Die erwähnten Sensoren werden in der Regel als Überfüllsonden bezeichnet.

In der Regel werden die Signale der genannten Sensoren in der Steuerung der Förderbandanlage verarbeitet und der Antriebsmotor abgestellt. Bei einfachen Anlagen wirken die Ausgänge der Überfüllsonden auf den Eingang eines Relais, über welches der Antriebsmotor betrieben wird.

Wenn die Förderbandanlage leistungsfähig ist, kann sie eine grosse Materialmenge in kurzer Zeit fördern. Beispielsweise sind bei Anwendungen im Tunnelbau oder im Betrieb in Minen Förderleistungen bis zu 1000 Tonnen pro Stunde, umgerechnet also 278 kg pro Sekunde üblich. Eine Schurre von beispielsweise einem Kubikmeter Innenvolumen kann bei einem solchen Förderbandanlage innert weniger Sekunden gefüllt werden, wenn der weiterführende Materialabfluss innerhalb der Schurre oder an der Ausgangsöffnung der Schurre beispielsweise durch einen Fremdkörper blockiert, unterbrochen oder stark behindert wird.

Das zuführende Förderband muss in einem solchen Fall einer Unterbrechung des weiterführenden Materialabflusses, wenn irgend möglich innerhalb kurzer Zeit, d.h. insbesondere innert Sekunden angehalten werden, um die oben dargestellten Überfüllungen, Schäden oder Unfälle zu vermeiden. Bei zuführenden Förderbändern grosser Länge ist eine schnelle Abschaltung bzw. ein schnelles Stoppen schwierig wegen der grossen bewegten Massen, die angehalten werden müssen.

Werden solche Förderbandanlagen beispielsweise im Tunnelbau oder im Betrieb von Minen eingesetzt, sind zwei für die zuverlässige Steuerung der Anlagen weitere Informationen wesentlich. Zum einen muss die Steuerung erkennen können, ob die zuführende Bandanlage in Betrieb ist. Des Weiteren muss die Steuerung zuverlässig erfassen können, ob Material auf der zuführenden Bandanlage gefördert wird. Dafür werden in der Praxis separate Sensoren eingesetzt. Zum einen werden Sensoren eingesetzt, welche die Bewegung des Förderbandgurtes erkennen und so der Steuerung mitteilen können, ob sich die Anlage bewegt. Zum anderen werden beispielsweise analoge Näherungssensoren eingesetzt, die oberhalb des oberen Förderbandgurtes angeordnet sind, und durch die Veränderung des Abstandes Sensor zu detektierten Objekt erfassen können, ob sich Material auf dem oberen Förderbandgurt befindet.

Für die drei erwähnten Aufgabenstellungen (Erkennen einer möglichen Überfüllung der Schurre, Erkennen der Bewegung des zuführenden Förderbandes und Erkennen von gefördertem Material auf dem zuführenden Förderband) sind bei realen ausgeführten Anlagen drei separate Sensoren nötig.

Der Erfindung liegt daher die Aufgabe zugrunde, eine Förderbandanlage sowie ein Verfahren zum Betreiben einer anzugeben, welche die vorstehend geschilderten Nachteile herkömmlicher Förderbandanlagen eliminieren.

Insbesondere ist es Aufgabe der vorliegenden Erfindung, eine Förderbandanlage bereitzustellen, bei welcher die Überfüllung der Schurre, Beschädigung der Anlage oder Unfälle vermieden werden, sowie detektiert werden kann, ob die Förderbandanlage in Betrieb ist und ob sie Material fördert.

### Kurze Beschreibung der Erfindung

Diese Aufgabe kann erfindungsgemäss durch eine Förderbandanlage sowie ein Verfahren zum Betreiben einer Förderbandanlage gemäss den unabhängigen Patentansprüchen gelöst werden.

Vorteilhafte Ausgestaltungen ergeben sich aus den abhängigen Ansprüchen.

Eine erfindungsgemässe Förderbandanlage wie nachfolgend beansprucht kann die Merkmale von Anspruch 1 weiter unten aufweisen.

Eine erfindungsgemässe Förderbandanlage, insbesondere zum Transport von Schüttgut, kann aufweisen:
a. ein erstes und/oder zuführendes Förderband;
b. eine Fördermaterial-Übergabekonstruktion, insbesondere eine Schurre;
c. ein zweites und/oder weiterführendes Förderband;
d. wobei die Fördermaterial-Übergabekonstruktion dazu eingerichtet ist, vom ersten Förderband zugeführtes, insbesondere abgeworfenes, Fördermaterial dem zweiten Förderband zuzuleiten;
e. eine Tragkonstruktion, an oder auf welcher die Fördermaterial-Übergabekonstruktion in definierter Position relativ zum ersten und/oder zweiten Förderband gelagert ist;
f. eine Messeinrichtung zur Ermittlung einer oder mehrerer zwischen Fördermaterial-Übergabekonstruktion und Tragkonstruktion wirkenden Kraft bzw. Kräfte.

Ein Teil, insbesondere ein Ende, des ersten Förderbands, welches insbesondere in einem Bereich einer Antriebstrommel des ersten Förderbands gebildet sein kann, kann oberhalb eines Teils, insbesondere eines Anfangs, des zweiten Förderbandes positioniert sein, welcher insbesondere im Bereich einer Umlenktrommel des zweiten Förderbands gebildet sein kann. Die beiden Förderbänder können dabei so angeordnet sein, dass vom ersten Förderband zugeführtes Fördermaterial auf das zweite Förderband fällt bzw. abgeworfen wird, insbesondere unter Einwirkung einer Schwerkraft und in Verbindung mit einer Anfangsgeschwindigkeit des zugeführten Fördermaterials, welche zumindest annähernd einer Geschwindigkeit entspricht, mit welcher ein Förderbandgurt des ersten Förderbands umläuft.

Aufgrund physikalischer Vorgänge, insbesondere von Stössen, zwischen einzelnen Teilchen des in der Regel granularen Fördermaterials, insbesondere Schüttguts, bildet sich bei einem Abwurf bzw. einem Herunterfallen des Fördermaterials eine Verteilung bzw. Dispersion von Geschwindigkeiten um einen Mittelwert, welche dazu führen kann, dass ein Teil des Fördermaterials nicht auf dem zweiten Förderband auftritt.

Um einen Verlust von Fördermaterial wie z.B. vorstehend beschrieben zu verhindern, kann eine Fördermaterial-Übergabekonstruktion vorgesehen sein, um das vom ersten Förderband zugeführte und abgeworfenen oder herabfallende Fördermaterial dem zweiten Förderband zuzuleiten. Dabei kann es sich um eine passive und/oder starre Leitkonstruktion handeln, insbesondere in Form einer Rutsche, Schütte, eines Fallrohres, Trichters, oder einer Gosse ausgebildet sein kann. Derartige Fördermaterial-Übergabekonstruktionen werden häufig als Schurre bezeichnet.

Um einen Verlust von Fördermaterial wirkungsvoll zu verhindern, kann die Fördermaterial-Übergabekonstruktion zumindest im Wesentlichen ortsfest in definierter Position zum ersten und oder zweiten Förderband installiert sein, wobei eine Verstellbarkeit der Position vorgesehen sein kann.

Dazu kann die Fördermaterial-Übergabekonstruktion insbesondere auf einer Tragkonstruktion gelagert sein, insbesondere auf die Tragkonstruktion gestellt oder an der Tragkonstruktion aufgehängt sein.

Die Tragkonstruktion kann zumindest einen Teil des ersten und/oder zweiten Förderbands tragen, insbesondere die Antriebstrommel des ersten Förderbands und/oder die Umlenktrommel des zweiten Förderbands.

Insbesondere zur Sicherung der Fördermaterial-Übergabekonstruktion können Befestigungs- oder Fixierungsmittel, insbesondere lösbare Befestigungs- oder Fixierungsmittel, vorgesehen sein, welche insbesondere eine Beweglichkeit der Fördermaterial-Übergabekonstruktion reduzieren oder eliminieren. Diese können eine Restbeweglichkeit, insbesondere in Form eines Spiels, zwischen Fördermaterial-Übergabekonstruktion und Tragkonstruktion zulassen, um thermische, belastungsinduzierte oder andere Verschiebungen zuzulassen. Die Befestigungs- oder Fixierungsmittel können auch eine Schwingungs- oder Vibrationsdämpfung aufweisen.

Die Messeinrichtung kann einen oder mehrere Kraftsensoren, insbesondere Wägezellen, umfassen. Diese können in die Befestigungs- oder Fixierungsmittel integriert sein.

Bei einer Fördermaterial-Übergabekonstruktion, welche mit einem oder mehreren Seilen, Drähten oder Ketten an der Tragkonstruktion aufgehängt ist, kann jeweils ein Kraftsensor in einem oder mehrerer der Seile, Drähte oder Ketten vorgesehen sein.

Bei einer Fördermaterial-Übergabekonstruktion, welche auf die Tragkonstruktion gestellt ist, kann jeweils ein Kraftsensor an einem oder mehreren Auflagepunkten vorgesehen sein oder einen Auflagepunkt bilden.

Die Messeinrichtung kann dazu ausgelegt sein, ein Gewicht der Fördermaterial-Übergabekonstruktion zu ermitteln, insbesondere ein Gesamtgewicht aus einem Nettogewicht der Fördermaterial-Übergabekonstruktion und einem in bzw. auf der Fördermaterial-Übergabekonstruktion sich befindenden, und insbesondere auf dieser aufliegenden, Fördermaterial. Dies kann dadurch erfolgen, dass ein einzelner Kraftsensor in einer Art und Weise vorgesehen wird, dass er mit einer gesamten Gewichtskraft der Fördermaterial-Übergabekonstruktion und ggf. sich in bzw. auf dieser befindendem Fördermaterial beaufschlagt wird, was insbesondere bei einer Aufhängung der Fördermaterial-Übergabekonstruktion an einem einzelnen Punkt in für den Fachmann einfacher Weise realisierbar ist. Falls die Fördermaterial-Übergabekonstruktion auf die Tragkonstruktion gestellt ist, wobei an jedem von mehreren Auflagepunkten ein Kraftsensor vorgesehen ist, kann das Gewicht aus der Summe aller von den Kraftsensoren gemessenen Kräfte bestimmt werden. In anderen Fällen kann das Gewicht auch mittels Schätzung anhand der von einem oder mehreren Kraftsensoren gemessenen Kräfte geschätzt werden, wobei ein Zusammenhang zwischen Kraft bzw. Kräften und Gewicht insbesondere experimentell ermittelt werden kann.

Erstes und zweites Förderband können Teil einer Kaskade oder Kette sein, in welcher dem ersten Förderband ein oder mehrere weitere zuführende Förderbänder vorgeschaltet bzw. vorgelagert sind, und/oder dem zweiten Förderband ein oder mehrere weitere zuführende Förderbänder vorgeschaltet bzw. vorgelagert sind, ein oder mehrere weitere weiterführende Förderbänder nachgeschaltet bzw. nachgelagert sind. Zwischen zwei benachbarten Förderbändern kann dabei ebenfalls jeweils eine weitere Fördermaterial-Übergabekonstruktion mit einer weiteren Tragkonstruktion und einer weiteren Messeinrichtung wie vorstehend beschrieben vorgesehen sein.

Das erste oder das erste weitere zuführende Förderband der Kaskade kann mit Material beschickt werden, welches von einer Tunnelbohrmaschine im Bohrbetrieb generiert werden kann. Dieses Material kann insbesondere Granit und/oder Quarz enthalten und oder zumindest im Wesentlichen aus Granit und/oder Quarz bestehen.

Die Förderbandanlage kann eine Steuerungseinrichtung, insbesondere eine Regelungseinrichtung, aufweisen, welche eine Geschwindigkeit und/oder einen Antrieb des ersten und/oder zweiten Förderbands in Abhängigkeit der zwischen Fördermaterial-Übergabekonstruktion und Tragkonstruktion wirkenden Kraft bzw. Kräfte, insbesondere individuell, steuert, insbesondere regelt; ggf. auch eine Geschwindigkeiten und/oder Antriebe eines, mehrerer oder alle weiteren zuführenden und/oder weiterführenden Förderbänder. Eine derartige Steuerungseinrichtung, insbesondere Regelungseinrichtung, kann es ferner erlauben, einen Füllungsgrad der Fördermaterial-Übergabekonstruktion im Betrieb zu kontrollieren, insbesondere zu regeln.

Die Steuerungseinrichtung kann dazu eingerichtet sein, das erste Förderband und/oder das zweite Förderband zu verlangsamen, insbesondere zu stoppen, wenn ein oder mehrere Kräfte und/oder das Gewicht einen vorgegebenen ersten bzw. zweiten Wert überschreitet.

Die Steuerungseinrichtung kann ferner dazu eingerichtet sein, ein, mehrere oder alle weiteren zuführenden und/oder weiterführenden Förderbänder zu verlangsamen, insbesondere zu stoppen, wenn ein oder mehrere Kräfte und/oder das Gewicht den vorgegebenen ersten bzw. zweiten Wert überschreiten.

Alternativ und/oder zusätzlich kann die Steuerungseinrichtung dazu eingerichtet sein, das zweite und/oder ein, mehrere oder alle weiteren weiterführenden Förderbänder zumindest vorübergehend zu beschleunigen, wenn ein oder mehrere Kräfte und/oder das Gewicht den vorgegebenen ersten bzw. zweiten oder einen vorgegebenen dritten Wert überschreiten, welcher dritte Wert insbesondere kleiner sein kann als der erste oder zweite Wert.

Ein erfindungsgemässes Verfahren zum Betreiben einer Förderbandanlage wie nachfolgend beansprucht kann die Merkmale von Anspruch 9 weiter unten aufweisen.

Ein erfindungsgemässes Verfahren zum Betreiben einer Förderbandanlage mit
a. einem ersten und/oder zuführenden Förderband;
b. einer Fördermaterial-Übergabekonstruktion, insbesondere einer Schurre; und
c. einem zweiten und/oder weiterführendem Förderband;
kann die folgenden Schritte umfassen:
d. Zuführen von Fördermaterial zur Fördermaterial-Übergabekonstruktion mittels des ersten Förderbands;
e. Wegtransportieren des Fördermaterials mittels des zweiten Förderbands;
f. Messen einer auf die Fördermaterial-Übergabekonstruktion wirkenden Kraft, insbesondere Gewichtskraft, mittels einer Messeinrichtung;
g. Steuern, insbesondere Regeln, einer Geschwindigkeit oder eines Antriebs des ersten Förderbands in Abhängigkeit von der Kraft.

Die Förderbandanlage kann insbesondere eines oder mehrere der oben beschriebenen Merkmale und/oder Ausgestaltungen aufweisen. Insbesondere kann die Fördermaterial-Übergabekonstruktion dazu eingerichtet sein, vom ersten Förderband zugeführtes, insbesondere abgeworfenes, Fördermaterial dem zweiten Förderband zuzuleiten.

In einer Variante des erfindungsgemässen Verfahrens wird ein Streuungsmass ermittelt, welches insbesondere eine Streubreite einer oder mehrerer gemessenen Kräfte und/oder eines oder mehrerer entsprechenden Gewichte um einen Lageparameter herum beschreibt, wie beispielsweise im Wikipedia-Artikel "Streuungsmaß (Statistik)" in der Fassung vom 18. August 2020, 17:44 (s. https://de.wikipedia.org/w/index.php?title=Streuungsma%C3%9F (Statistik)&oldid=202893467) beschrieben. Beim Streuungsmass kann es sich insbesondere um eine Varianz, insbesondere eine zeitliche Varianz, einer oder mehrerer gemessenen Kräfte und/oder eines oder mehrerer entsprechenden n Gewichte handeln. Das Streuungsmass, insbesondere die Varianz, kann dabei anhand bekannter mathematischer Methoden ermittelt werden. Sie kann insbesondere als Maximalbetrag einer Abweichung einer momentanen Kraft oder eines momentanen Gewichts von einem Durchschnittswert der Kraft oder des Gewichts innerhalb eines Zeitintervalls mit vorgegebener Länge Δ*t* ermittelt werden, wobei 0,05s < Δ*t* < 10s gelten kann, vorzugsweise mit 0,1s < Δ*t* < 3s.

Das Streuungsmass, insbesondere die Varianz, kann als Mass für Vibrationen der Förderbandanlage, insbesondere des ersten Förderbands angesehen werden, wobei insbesondere von einem direkten, vorzugsweise zumindest annähernd linearen Zusammenhang ausgegangen werden kann.

Eine Stärke oder Heftigkeit der Vibrationen kann als Indiz dafür herangezogen werden, ob die Förderbandanlage, insbesondere das erste Förderband, in Betrieb ist oder nicht, und oder ob die Förderbandanlage, insbesondere das erste Förderband, Material transportiert oder nicht. Dabei kann insbesondere davon ausgegangen werden, dass die Förderbandanlage, insbesondere das erste Förderband, nicht in Betrieb ist, wenn Stärke oder Heftigkeit der Vibrationen unterhalb eines ersten Grenzwertes liegt. Liegt die Stärke oder Heftigkeit der Vibrationen Stärke oder Heftigkeit der Vibrationen oberhalb des ersten Grenzwertes, aber unterhalb eines zweiten Grenzwertes, kann insbesondere davon ausgegangen werden, dass die Förderbandanlage, insbesondere das erste Förderband, in Betrieb ist, jedoch kein Material fördert. Liegt die Stärke oder Heftigkeit der Vibrationen Stärke oder Heftigkeit der Vibrationen oberhalb des zweiten Grenzwertes, kann insbesondere davon ausgegangen werden, dass die Förderbandanlage, insbesondere das erste Förderband, in Betrieb ist und Material fördert, wobei ferner davon ausgegangen werden kann, dass eine grössere Stärke oder Heftigkeit der Vibrationen einer höheren Förderleistung entspricht.

Liegt die Stärke oder Heftigkeit der Vibrationen Stärke oder Heftigkeit der Vibrationen oberhalb eines dritten Grenzwertes, welcher grösser ist als der erste und zweite Grenzwert, kann davon ausgegangen werden, dass eine Störung vorliegt und/oder eine Sicherheit der Förderbandanlage oder deren Umgebung beeinträchtigt sein kann.

Geeignete Werte für den ersten, zweiten und/oder dritten Grenzwert können beispielsweise experimentell bestimmt werden, insbesondere während eine Pilotbetriebs der Förderbandanlage.

Die Steuerungseinrichtung kann eingerichtet sein, das erste Förderband und/oder das zweite Förderband zu verlangsamen, insbesondere zu stoppen, wenn die Stärke oder Heftigkeit der Vibrationen Stärke oder Heftigkeit der Vibrationen oberhalb des ersten Grenzwertes, aber unterhalb des zweiten Grenzwertes liegt. Dadurch kann ein (unnötiger) Energieverbrauch und/oder Verschleiss der Förderbandanlage reduziert werden.

In analoger Weise wie vorstehend beschrieben können ein Streuungsmass, Grenzwerte und/oder eine Stärke oder Heftigkeit von Vibrationen für eine erfindungsgemässe Förderbandanlage wie weiter oben beschrieben ermittelt werden. Insbesondere kann eine Überwachungseinrichtung und/oder die Steuerungseinrichtung dazu ausgelegt sein, entsprechende Werte zu ermitteln. Die Überwachungseinrichtung kann eigenständig oder als Teil der Förderbandanlage ausgebildet sein.

Im Folgenden wird anhand beiliegender Zeichnungen ein bevorzugtes Ausführungsbeispiel der Erfindung beschrieben.

Es zeigen:
Abbildung 1 eine Ausführungsform einer erfindungsgemässen Förderbandanlage im seitlichen Querschnitt;
Abbildung 2 die Förderbandanlage aus Abbildung 1 bei Behinderung eines Materialflusses durch die Schurre.

### Wege zur Ausführung der Erfindung

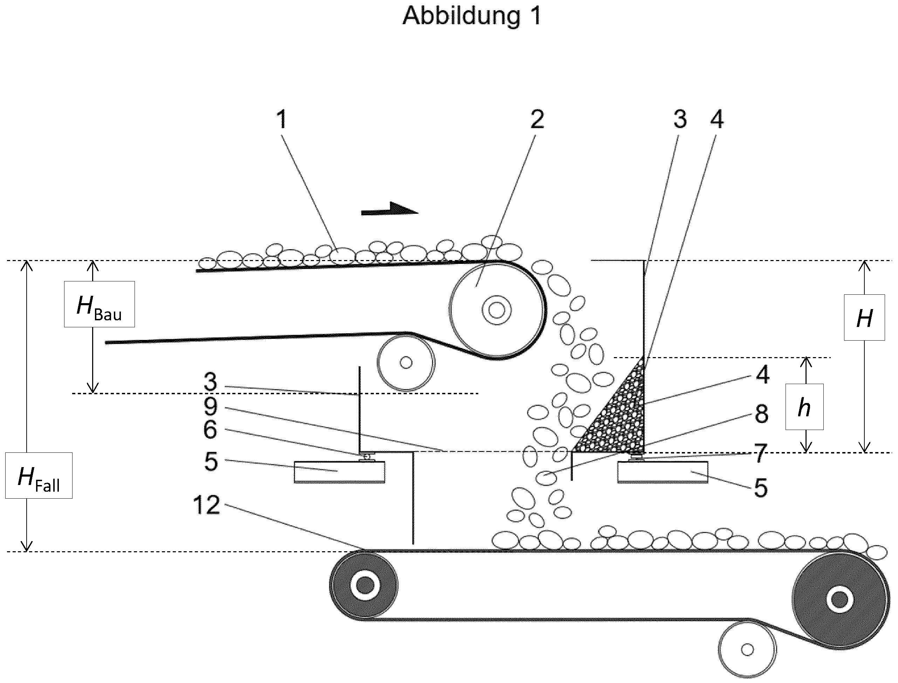

In Abbildung 1 ist im seitlichen Querschnitt ein erstes bzw. zuführendes Förderband 2 und eine am Übergabeende positionierte Schurre 3 dargestellt. Auf dem zuführenden Förderband 2 befindet sich das zugeführte Material 1, hier in Form von symbolischen Steinen dargestellt. Das zugeführte Material 1 durchquert die Schurre 3, hauptsächlich durch freien Fall und verlässt die Schurre 3 an der Ausgangsöffnung 9 im unteren Bereich der Schurre 3. Das Material ist auf der Zeichnung als weiterführender Materialabfluss 8 dargestellt, welcher von einem zweiten bzw. weiterführenden Förderband 12 abtransportiert wird.

Bei Anwendungen im Tunnelbau oder im Betrieb in Minen kann dabei eine Fallhöhe *H*_{Fall} relativ klein gewählt sein, d.h. sich insbesondere in der Grössenordnung einer Bauhöhe *H*_{Bau} des zuführenden Förderbands 2 bewegen, insbesondere mit *H*_{Fall} < 5 *H*_{Bau}, vorzugsweise *H*_{Fall} < 2 *H*_{Bau}.

Die Schurre 3 ist auf einer umgebenden tragenden Konstruktion 5 mittels Befestigungsmitteln 6, insbesondere ersten Befestigungsmitteln, ohne Messeinrichtung und Befestigungsmitteln 7, insbesondere zweiten Befestigungsmitteln, mit Messeinrichtung befestigt.

In der Schurre 3 ist ein konstantes Materialpolster 4 dargestellt, das sich während des Betriebs der Anlage vorzugsweise nicht oder nur unwesentlich ändert. Das Materialpolster weist eine Höhe h auf, welche kleiner ist als eine maximale Füllhöhe H der Schurre 3, welche insbesondere einer Bauhöhe der Schurre entsprechen kann. Die Höhe h kann zumindest annähernd proportional zu einem Volumen, einer Masse und/oder einem Gewicht des Materialpolsters sein.

Das Gesamtgewicht der Schurre 3 und des konstanten Materialpolsters 4 in der Schurre wird durch die Befestigungsmittel 6, 7 auf die umgebende tragende Konstruktion 5 abgestützt. Das Gesamtgewicht der Schurre 3 und des konstanten Materialpolsters 4 kann durch die Messeinrichtung am Befestigungsmittel 7 ermittelt werden. Ist die Schurre 3 teilweise mit Befestigungsmitteln 6 ohne Messeinrichtung an der umgebenden tragenden Stahlkonstruktion 5 befestigt, so muss das Gesamtgewicht aus den Messwerten der Messeinrichtung am Befestigungsmittel 7 und der Geometrie der Befestigungsmittel 6, 7 näherungsweise ermittelt werden.

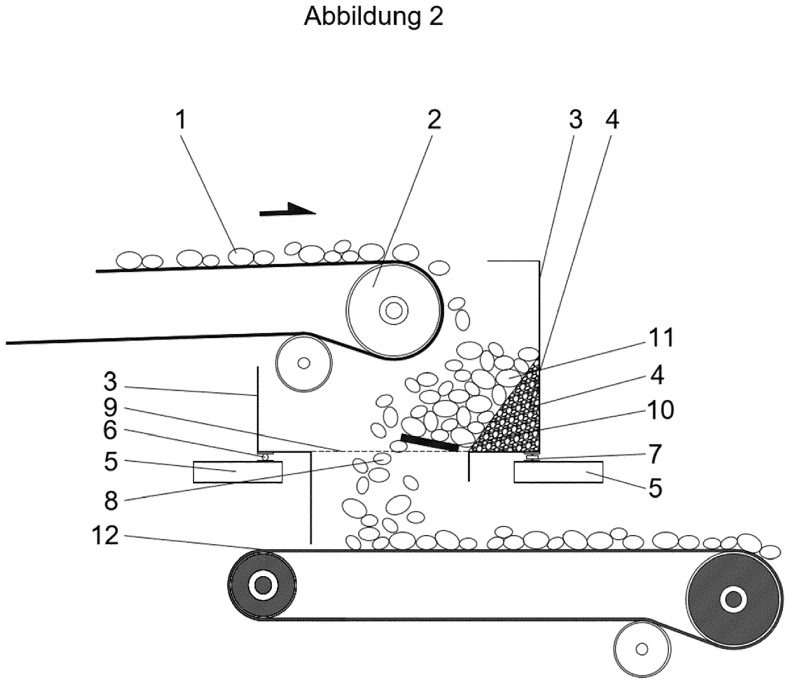

In Abbildung 2 ist die gleiche Anlage dargestellt wie in Abbildung 1. Im unteren Teil der Schurre 3 ist ein symbolisch dargestellter Fremdkörper 10 dargestellt. Der Fremdkörper 10 behindert den Materialfluss des zugeführten Materials 1 durch die Schurre 3. Der Massenstrom des weiterführenden Materialflusses 8 an der Ausgangsöffnung 9 der Schurre 3 ist dadurch reduziert. Dadurch wird in der Schurre 3 Material aufgestaut und als zusätzliches Material 11 in der Abbildung 2 dargestellt.

Das Gesamtgewicht der Schurre 3 und des konstanten Materialpolsters 4 in der Schurre wird um das zusätzliche Material 11 in der Schurre erhöht. Durch die am Befestigungsmittel 7 angeordnete Messeinrichtung wird das höhere Gesamtgewicht messbar. Ist die Schurre 3 teilweise mit Befestigungsmitteln 6 ohne Messeinrichtung an der umgebenden tragenden Konstruktion 5 befestigt, so muss das nun höhere Gesamtgewicht aus den Messwerten der Messeinrichtung am Befestigungsmittel 7 und der Geometrie der Befestigungsmittel 6, 7 näherungsweise ermittelt werden.

Das gemessene zusätzliche Gewicht, das durch das zusätzliche Material 11 in der Schurre 3 durch die Verwendung mindestens eines erfindungsgemässen Befestigungsmittels 7 mit Messeinrichtung ermittelt wird, lässt über die in der Regel bekannte Dichte des zugeführten Materials 1 auf den Füllungsgrad der Schurre 3 schliessen, insbesondere auf die Höhe h des Materialpolsters. Mit diesem Signal, insbesondere einem Signal, dass den Füllungsgrad repräsentiert, insbesondere zu diesem zumindest annähernd proportional ist, ist es einer hier nicht weiter beschriebenen Steuerungseinrichtung, insbesondere Steuerung, des zuführenden Förderbands 2 möglich, abhängig von diesem Signal die Geschwindigkeit der Bandanlage zu erhöhen oder zu reduzieren oder sogar das zuführende Förderband 2 anzuhalten und/oder abzustellen. Unter dem Füllungsgrad kann insbesondere ein Verhältnis aus einem momentanen Materialvolumen in der Schurre 3, insbesondere einem Volumen des Materialpolsters, zu einem (hypothetischen) maximalen Materialvolumen in der Schurre 3 verstanden werden. Der Füllungsgrad kann insbesondere zumindest annähernd einem Volumen h/H aus Höhe des Materialpolsters und maximaler Füllhöhe entsprechen.

Grundsätzlich kann die Schurre auch durch Befestigungsmittel 6, 7 befestigt werden, die auf Zug belastet werden und an einer umgebenden tragenden Konstruktion hängend befestigt sind.

Es sind auch Mischformen von druck- und zugbelasteten Befestigungsmitteln 6, 7 möglich, mit denen die Schurre 3 an der umgebenden tragenden Konstruktion 5 befestigt ist. Ebenso ist die Verwendung von schubbelasteten Befestigungsmitteln 6, 7 möglich, auch in Kombination mit zug- oder druckbelasteten Befestigungsmitteln 6, 7.

Dies ist zeichnerisch nicht dargestellt.

Ist die Förderbandanlage 2 in Bewegung, so entstehen in der Praxis Vibrationen, hervorgerufen durch Verschmutzungen, Unwucht der Antriebstrommel oder durch die Antriebsmotoren oder deren Getriebe. Diese Vibrationen setzen sich über Stahlbau bis in die Schurre fort, sodass diese ebenfalls in Vibrationsbewegungen gerät. Dadurch sind die Vibrationen direkt mit der erfindungsgemässen Messeinrichtung des Befestigungsmittels 7 messbar.

Das gleiche gilt für gefördertes Material 1, welches vom zuführenden Förderband 2 aus in die Schurre 3 fällt. Beim Aufprall dieses fallenden Materials auf Teile der Schurre 3 oder auf bereits in der Schurre 3 vorhandenem Material 11 oder 4 entstehen ebenfalls Vibrationen. Diese unterscheiden sich in Frequenz und Amplitude stark von den Vibrationen hervorgerufen durch die Bewegung des zuführenden Förderbandes 2. Für eine elektronische Steuerung, welche die Messdaten der erfindungsgemässen Messeinrichtung des Befestigungsmittels 7 auswertet, ist dies einfach zu erkennen.

Gegenüber dem Stand der Technik, bei dem die Überfüllung der Schurre 3 durch konventionelle Überfüllsensoren beispielsweise basierend auf Ultraschall- oder Radartechnik ermittelt wird, hat die erfindungsgemässe Detektion einer Überfüllung noch weitere Vorteile:
Die Messung von Kräften mittels Wägezellen oder ähnlichen Einrichtungen ist sehr genau, zuverlässig, langzeitstabil und einfach.

Zudem sind die Messeinrichtungen, meist in Form von Wägezellen, die mit Dehnmessstreifen arbeiten, sehr verschmutzungsunempfindlich. Dies ist beim Betrieb von Förderbandanlagen beispielsweise im Tunnelbau oder im Bereich Mining sehr wichtig. Die gemäss dem Stand der Technik üblicherweise eingesetzten Überfüllsensoren auf Basis Ultraschall oder Radar sind empfindlich auf Verschmutzung oder Vereisung und können in der Folge völlig falsche Messsignale liefern. Diese falschen Signale wiederum werden von der auswertenden Steuerung der zuführenden Förderbandanlage falsch interpretiert und die Anlage nicht den realen Bedingungen entsprechend betrieben.

Der Einsatz von erfindungsgemässen Befestigungsmitteln 7 mit Messeinrichtung liefert, soweit es sich um eine Messeinrichtung mit analogen Ausgangssignal handelt, bereits Messdaten an die Steuerung, bevor die Anlage eingeschaltet ist. Zu diesem Zeitpunkt kann das Eigengewicht der Schurre 3 und das Gewicht des konstanten Materialpolsters 4 in der Schurre festgestellt werden. Damit kann die Steuerung bereits vor dem Einschalten prüfen, ob die Messeinrichtung vorhanden ist und sinnvolle Messwerte liefert.

Diese Prüfung ist relevant, da es in der Praxis häufig vorkommt, dass Messeinrichtungen oder Sensoren, die Abschaltungen der Anlage bewirken können, vom Betriebspersonal so modifiziert werden oder an einem anderen Ort platziert werden, das Abschaltungen der Anlage nicht mehr vorkommen. In diesen Fällen würde dann gegebenenfalls eine real vorkommende Überfüllung der Schurre 3 nicht mehr detektiert und ein Schaden oder Unfall die mögliche Folge. Wird hingegen eine Messeinrichtung am Befestigungsmitteln 7 demontiert, so zeigt diese Messeinrichtung keine Kraft mehr an. Die Steuerung kann dies einfach erkennen, eine entsprechende Fehlermeldung ausgeben und den Betrieb der Anlage verhindern.

Ein erfindungsgemässes Befestigungsmittel 7 mit Messeinrichtung mit analogem Ausgang hat weiter den Vorteil, dass Vibrationen der Anlage Auswirkungen haben auf das Ausgangssignal. Die Steuerung kann diese Vibrationen auswerten. Die Steuerung kann damit erkennen, ob das zuführende Förderband 2 in Betrieb ist oder nicht. Sie kann ausserdem erkennen, ob Material 1 gefördert wird oder nicht. Die Steuerung kann weiterhin erkennen, ob unzulässig hohe Vibrationen auftreten, die die Sicherheit des Förderbandes 2 oder dessen Umgebung gefährden und kann beispielsweise das zuführende Förderband 2 und/oder das weiterführende Förderband 12 abstellen. Diese Messungen sind mit üblichen Überfüllsensoren gemäss dem Stand der Technik nicht möglich.

Weitere Vorteile der erfindungsgemässen Ausführung mit Befestigungsmitteln 7 mit Messeinrichtungen sind:
Durch die genaue zuverlässige Messung der Kräfte sind schon geringe Änderungen des Gewichts von möglicherweise in der Schurre 3 vorhandenem zusätzlichen Material 11 erkennbar. Damit kann die Steuerung frühzeitig reagieren und beispielsweise die Geschwindigkeit des zuführenden Förderbandes 2 reduzieren, insbesondere das zuführende Förderband 2 zu stoppen. Damit steht der Steuerung mehr Zeit zur Verfügung, die Überfüllung der Schurre 3 zu verhindern. Wie oben beschrieben, kann die zu Verfügung stehende Zeit zum Abschalten des Förderbandes 2 bei hoher Förderleistung des zuführenden Förderbandes 2 sehr gering sein.

Durch die genaue zuverlässige Messung der Gewichtskräfte ist zusätzlich eine präzise Regelung der Geschwindigkeit des zuführenden Förderbandes 2 durch die Steuerung möglich. Damit wird ein häufiges Ein- und Ausschalten der Anlage vermieden. Ein- und Ausschaltvorgänge insbesondere bei langen Förderbandanlagen führen gegenüber dem stationären Betrieb zu zusätzlichen Kräften, Belastungen der Anlage und zusätzlichem Verschleiss und sind vorzugsweise zu vermeiden.

Die Regelung und/oder Steuerung kann insbesondere so eingerichtet sein, dass ein vorgegebener Füllungsgrad und/oder ein vorgegebenes Verhältnis h/H, insbesondere ein Füllungsgrad und/oder ein Verhältnis h/H von 0,4, vorzugsweise 0,25, höchst vorzugsweise 0,15 nicht überschritten wird, wobei die Steuerungseinrichtung insbesondere bei einem Erreichen eines entsprechenden Füllungsgrades und/oder ein Verhältnisses h/H das zuführende Förderband 2 und/oder das weiterführende Förderband 12 verlangsamt, insbesondere zumindest annähernd stoppt, ebenso weitere zuführende und/oder weiterführende Förderbände einer Kaskade oder Kette von Förderbändern.

Eine derartige Steuerung erlaubt es, eine Überfüllung der Schurre 3 zu vermeiden oder auszuschliessen, welche insbesondere auftreten kann, wenn eine Störung vorliegt, insbesondere wenn der Materialfluss durch die Schurre 3 blockiert, reduziert und/oder behindert wird, beispielweise durch zu grosse Teile oder Komponenten oder Fremdmaterial im Materialstrom.

Ein Verlangsamen, insbesondere Stoppen, des weiterführenden Förderbands 12 im Fall einer derartigen Störung kann eine Beschädigung desselben, der Schurre und/oder Tragkonstruktion verhindern, welche andernfalls beispielsweise durch festgeklemmtes, aus der Schurre nach unten herausragendes Fremdmaterial, entstehen können. Vor dem Verlangsamen, insbesondere Stoppen, des weiterführenden Förderbands 12 kann letzteres zunächst zumindest kurzzeitig beschleunigt werden, insbesondere wenn der vorgegebene Füllungsgrad und/oder das vorgegebene Verhältnis h/H nur geringfügig überschritten wird, z.B. um weniger als 10%, weniger als 25% oder weniger als 33%. Falls nach einer kurzen Zeitdauer, insbesondere im Bereich von wenigen Sekunden bis wenigen zehn Sekunden, der vorgegebene Füllungsgrad und/oder das vorgegebene Verhältnis h/H nicht mehr überschritten wird, kann ein Verlangsamen oder Stoppen des zuführenden Förderbands 2 und/oder des weiterführenden Förderbands 12 unterbleiben.

Zudem können sich folgende zusätzliche Vorteile ergeben:
- Schnellere Reaktion, insbesondere auf Störungen, möglich, weil Überfüllung früher detektiert werden kann;
- feinere bzw. exaktere Reaktion möglich, weil bereits geringe Änderungen, insbesondere der gemessenen Kraft/Kräfte oder Vibrationen, analog ausgewertet werden können;
- ermöglicht genauere analoge Regelung der Antriebe, sowie langsameres oder schnelleres laufen lassen;
- kann nicht überlistet werden, z.B. durch Manipulation an der Messeinrichtungen;
- kann nicht demontiert werden;
- ändert die Messwerte nicht bei Verschmutzung;
- kann Vibrationen erkennen, z.B. durch bei ungünstigem Betrieb;
- erkennt sicher Materialstrom, insbesondere Vorhandensein oder Abwesenheit von Fördermaterial;
- erlaubt zumindest eine schätzungsweise Aussage über die Materialmenge / Förderleistung; und/oder
- kann zuverlässig erkennen, ob die Anlage läuft (auch leer).

Diese Beschreibung und alle begleitenden Zeichnungen, die Aspekte und Ausführungsformen der vorliegenden Erfindung illustrieren, sollten nicht als Einschränkung der Ansprüche verstanden werden, die die geschützte Erfindung definieren. Mit anderen Worten, obwohl die Erfindung in den Zeichnungen und der vorstehenden Beschreibung illustriert und ausführlich beschrieben wurde, sind diese Illustration und Beschreibung als illustrativ oder beispielhaft und nicht als einschränkend anzusehen. Verschiedene mechanische, kompositorische, strukturelle, elektrische und betriebliche Änderungen können vorgenommen werden, ohne vom Geist und Umfang dieser Beschreibung und der Ansprüche abzuweichen. In einigen Fällen wurden bekannte Schaltungen, Strukturen und Techniken nicht im Detail gezeigt, um die Erfindung nicht zu verdecken. Es versteht sich also von selbst, dass Änderungen und Modifikationen durch solch gewöhnliche Fertigkeiten innerhalb des Umfangs und des Geistes der folgenden Ansprüche vorgenommen werden können. Insbesondere deckt die vorliegende Erfindung weitere Ausführungsformen mit einer beliebigen Kombination von Merkmalen aus verschiedenen und/oder individuellen Ausführungsformen, wie oben und unten beschrieben, ab. Erfindungsgemässe Ausführungsformen können insbesondere weitere und/oder zusätzliche Merkmale, Elemente, Aspekte usw. enthalten, die nicht in den Zeichnungen dargestellt oder oben beschrieben sind.

Die Offenlegung erstreckt sich auch auf alle weiteren Merkmale, die in jeder Abbildung einzeln dargestellt sind, auch wenn sie in der vorstehenden oder folgenden Beschreibung möglicherweise nicht beschrieben wurden. Auch einzelne Alternativen der in jeder Abbildung beschriebenen Ausführungsformen sowie die Beschreibung und einzelne Alternativen von Merkmalen dieser Ausführungsformen können vom Gegenstand der Erfindung oder vom offenbarten Gegenstand ausgeschlossen werden. Die Offenbarung umfasst sowohl den Gegenstand, der aus den in den Ansprüchen oder den beispielhaften Ausführungsformen definierten Merkmalen besteht, als auch den Gegenstand, der diese Merkmale enthält.

Die vorliegende Offenlegung umfasst auch Ausführungsformen mit jeder Kombination von Merkmalen, die oben und/oder unten erwähnt oder gezeigt werden, in verschiedenen Ausführungsformen oder Varianten. Sie umfasst auch einzelne Merkmale, wie sie in den Abbildungen dargestellt sind, auch wenn sie dort in Verbindung mit anderen Merkmalen gezeigt werden und/oder oben oder unten nicht erwähnt sind. Die Offenbarung umfasst sowohl Ausführungsformen, die ausschliesslich die in den Ansprüchen oder den beispielhaften Ausführungsformen beschriebenen Merkmale enthalten, als auch solche, die zusätzliche andere Merkmale enthalten. Die Schritte jeder oben offengelegten oder unten beanspruchten Methode können vorzugsweise in der Reihenfolge durchgeführt werden, in der sie dargestellt sind, können aber auch in einer anderen Reihenfolge durchgeführt werden. Ein oder mehrere Schritte können ferner zumindest teilweise gleichzeitig ausgeführt werden.

Im Weiteren schliesst der Ausdruck "umfassen" und oder Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "annähernd", "ungefähr" und dergleichen in Verbindung mit einer Eigenschaft beziehungsweise einem Wert definieren insbesondere auch genau die Eigenschaft beziehungsweise genau den Wert. Die Begriffe "etwa", "näherungsweise", "ungefähr" usw. im Zusammenhang mit einem gegebenen Zahlenwert oder-bereich können sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen. Eine Angabe, wonach *a* ≈ *b* gilt oder a annähernd gleich b ist, kann dahingehend zu verstehen sein, dass |a-b|/(|a|+|b|) < 0,2, vorzugsweise |a-b|/(|a|+|b|) < 0,05, höchst vorzugsweise |a-b|/(|a|+|b|) < 0,01 gilt, wobei a und b beliebige, an irgendeiner Stelle in diesem Dokument definierte und/oder beschriebene oder anderweitig dem Fachmann bekannte Variablen oder Grössen repräsentieren kann.

Dass ein Merkmal oder eine Eigenschaft, beispielsweise eine spezifische, insbesondere geometrische, Form, zumindest näherungsweise ausgebildet, vorgesehen oder vorhanden ist, kann insbesondere bedeuten, dass Fertigungsvorgaben existieren, welche eine Vorgabe vorsehen, gemäss welcher das Merkmal entsprechend ausgebildet wird, wobei im Rahmen üblicher, dem Fachmann bekannter Fertigungstoleranzen eine Abweichung von der Vorgabe resultieren kann.

In der Beschreibung in Klammern gesetzte Merkmale, Eigenschaften, etc. können vorhanden und/oder erforderlich sein, müssen dies aber nicht, und sind grundsätzlich als optional zu betrachten. Solche Merkmale können dem besseren Verständnis der Erfindung durch Ausblenden von impliziten, aber erfindungsunwesentlichen Aspekten dienen. Derartige Merkmale, Eigenschaften, etc. können vorteilhaft sein.

Dass ein Element oder Merkmal in einer Richtung ausgedehnt ist oder sich in einer Richtung erstreckt, kann insbesondere bedeuten, dass Abmessungen des Elements oder Merkmals in dieser Richtung grösser sind als in anderen, insbesondere allen anderen Richtungen, insbesondere orthogonalen Richtungen.

Die Begriffe "oben", "unten", "vorne", "hinten" beziehen sich insbesondere auf die bzw. den Aufbau der Förderbandanlage in derjenigen Orientierung, in welcher diese in Fig. 1 gezeigt ist.

Die Erfindung gemäss der vorstehenden Beschreibung kann insbesondere in Form der und/oder in Kombination mit den nachstehenden Ausführungsformen realisiert werden:
- Förderbandanlage zum Transportieren von Material aufweisend ein zuführendes Förderbands, sowie eine Fördermaterial-Übergabekonstruktion, insbesondere eine Schurre, am Abwurfende des zuführenden Förderbandes in welche das transportierte Material fällt und die Fördermaterial-Übergabekonstruktion, insbesondere Schurre, durch eine Öffnung im unteren Bereich der Schurre wieder verlässt, wobei die Fördermaterial-Übergabekonstruktion, insbesondere Schurre, an mindestens einem Ort mit einem Befestigungsmittel an der umgebenden Konstruktion fixiert ist, welches über eine Messeinrichtungen zur Ermittlung der dabei auftretenden Kräfte hervorgerufen durch Eigengewicht des Material in der Fördermaterial-Übergabekonstruktion, insbesondere Schurre, durch Vibration der Anlage im Betrieb und/oder durch Vibration durch den Aufprall von fallendem Material in der Schurre verfügt.
- Förderbandanlage gemäss der vorangehenden Ausführungsform, wobei das zuführende Förderband einen elektrisch oder hydraulisch betriebenen Antriebsmotor aufweist.
- Förderbandanlage gemäss einer der vorangehenden Ausführungsformen, wobei die Förderbandanlage eine Regelungseinrichtung aufweist zur Regelung der Leistung und/oder der Drehzahl des Antriebsmotors des zuführenden Förderbandes.
- Förderbandanlage gemäss einer der vorangehenden Ausführungsformen, wobei die Messeinrichtungen an den Befestigungsmitteln der Fördermaterial-Übergabekonstruktion, insbesondere Schurre, im Wesentlichen die Gewichtskräfte der Schurre und deren Inhalt ermitteln.
- Förderbandanlage gemäss einer der vorangehenden Ausführungsformen, wobei alle Befestigungsmittel der Fördermaterial-Übergabekonstruktion, insbesondere Schurre, über Messeinrichtungen zur Ermittlung der dabei auftretenden Kräfte verfügen.
- Förderbandanlage gemäss einer der vorangehenden Ausführungsformen, wobei das zuführende Förderband reversierend, also vorwärts oder rückwärts laufend betrieben werden kann und an beiden Enden eine Fördermaterial-Übergabekonstruktion, insbesondere eine Schurre, angeordnet ist, bei der mindestens ein Befestigungsmittel zur Befestigung der Fördermaterial-Übergabekonstruktion, insbesondere Schurre, an der umgebenden Konstruktion über Messeinrichtungen zur Ermittlung der dabei auftretenden Kräfte verfügt.
- Förderbandanlage gemäss einer der vorangehenden Ausführungsformen, wobei die Messeinrichtung ein analoges Ausgangsignal liefert.
- Förderbandanlage gemäss einer der vorangehenden Ausführungsformen, wobei die Messeinrichtung ein digitales Ausgangsignal liefert.
- Verfahren zum Betreiben einer Förderbandanlage zum Transportieren von Material aufweisend mindestens die Schritte:
   - Fördern des Materials auf dem zuführenden Förderband und Abwurf des Materials in eine Fördermaterial-Übergabekonstruktion, insbesondere Schurre, am Abwurfende des Förderbandes,
   - und Messen der Kräfte hervorgerufen durch das Gewicht der Fördermaterial-Übergabekonstruktion, insbesondere Schurre, und des darin befindlichen Materials,
   - dadurch gekennzeichnet, dass die Geschwindigkeit des zuführenden Förderbandes geregelt wird in Abhängigkeit der vorgenannt gemessenen Kräfte.
- Verfahren gemäss der vorangehenden Ausführungsform, wobei das zuführende Förderband mit einer Geschwindigkeit *v*₁ zwischen einer vorgegebenen minimalen Geschwindigkeit *v*ₘᵢₙ und einer vorgegebenen maximalen Geschwindigkeit *v*ₘₐₓ, bzw. zwischen einer unteren oder einer oberen Geschwindigkeit betrieben wird, abhängig von den mit den Messeinrichtungen an Befestigungsmitteln der Schurre ermittelten Kräften.
- Verfahren gemäss der vorangehenden Ausführungsform, wobei die minimale bzw. untere Geschwindigkeit des zuführenden Förderbandes gleich Null ist, d.h. *v*ₘᵢₙ = 0.

### Bezugszeichenliste

- 1: zugeführtes Material auf einem zuführenden Förderband
- 2: zuführendes bzw. erstes Förderband
- 3: Schurre
- 4: konstantes Materialpolster in der Schurre
- 5: umgebende tragende Konstruktion
- 6: Befestigungsmittel ohne Messeinrichtung
- 7: Befestigungsmittel mit Messeinrichtung
- 8: weiterführender Materialabfluss
- 9: Ausgangsöffnung der Schurre
- 10: Fremdkörper
- 11: zusätzliches Material
- 12: wegführendes bzw. zweites Förderband

## Patentansprüche

1. Förderbandanlage, insbesondere zum Transport von Schüttgut, umfassend
a. ein erstes Förderband (2);
b. eine Schurre (3);
c. ein zweites Förderband (12);
d. wobei die Schurre (3) dazu eingerichtet ist, vom ersten Förderband zugeführtes, insbesondere abgeworfenes, Fördermaterial dem zweiten Förderband zuzuleiten;
e. eine Tragkonstruktion (5), an oder auf welcher die Schurre (3) in definierter Position relativ zum ersten und/oder zweiten Förderband gelagert ist;
f. eine Messeinrichtung (7) zur Ermittlung einer zwischen Schurre und Tragkonstruktion wirkenden Kraft, insbesondere Gewichtskraft.

2. Förderbandanlage nach Anspruch 1, **dadurch gekennzeichnet, dass** die Förderbandanlage eine Steuerungseinrichtung, insbesondere eine Regelungseinrichtung, aufweist; welche eine Geschwindigkeit und/oder einen Antrieb des ersten und/oder zweiten Förderbands in Abhängigkeit von der Kraft steuert, insbesondere regelt.

3. Förderbandanlage nach Anspruch 2, **dadurch gekennzeichnet, dass** die Steuerungseinrichtung dazu eingerichtet ist, das erste Förderband (2) zu stoppen, wenn die Kraft einen vorgegebenen ersten Wert *F*₁ überschreitet, insbesondere während einer vorgegebenen Zeitdauer Tₛₜₒₚ, vorzugsweise in einem Bereich zwischen 0,5s und 5,0s, d.h. 0,5s ≤ *T*ₛₜₒₚ ≤ 5,0s.

4. Förderbandanlage nach Anspruch 2 oder 3, **dadurch gekennzeichnet, dass** die Steuerungseinrichtung dazu eingerichtet ist, das zweite Förderband (12) zu verlangsamen, insbesondere zu stoppen, wenn die Kraft den ersten Wert *F*₁ oder einen vorgegebenen zweiten Wert *F*₂ überschreitet, insbesondere während einer vorgegebenen zweiten Zeitdauer *T*_{stop,2}; wobei vorzugsweise *T*_{stop,} ≈ *T*_{stop,2}.

5. Förderbandanlage nach einem der vorangehenden Ansprüche, **dadurch gekennzeichnet, dass** die Steuerungseinrichtung dazu eingerichtet ist, ein Streuungsmass S, insbesondere eine zeitliche Varianz, der Kraft zu ermitteln, insbesondere über einen Zeitraum Δ*t,* vorzugsweise mit 0,1s < Δ*t* < 3,0s.

6. Förderbandanlage nach Anspruch 3 oder 4 in Verbindung mit Anspruch 5, wobei die Förderbandanlage, insbesondere die Steuerungseinrichtung, dazu eingerichtet ist, die vorgegebene Zeitdauer *T*ₛₜₒₚ in Abhängigkeit in Abhängigkeit des Streuungsmass S, insbesondere der zeitlichen Varianz, der Kraft und/oder des Gewichts zu verändern, wobei vorzugsweise für ein erstes Streuungsmass *S*₁ und ein zweites Streuungsmass *S₂* mit *S₂* > *S₁* die Zeitdauer *T*ₛₜₒₚ(*S₂*) für *S₂* kleiner ist als die Zeitdauer *T*ₛₜₒₚ(*S₁*) für *S₁*, wobei vorzugsweise *T*ₛₜₒₚ(*S₂*) < *T*ₛₜₒₚ(*S₁*) gilt.

7. Förderbandanlage nach Anspruch 5 oder 6, wobei die Steuerungseinrichtung dazu eingerichtet ist, eine Geschwindigkeit des ersten und/oder zweiten Förderbands zu verringern, wenn das Streuungsmass *S*, insbesondere die Varianz, grösser ist als ein erster Grenzwert, aber kleiner ist als ein zweiter Grenzwert; wobei das zweite Förderband insbesondere gestoppt wird.

8. Verfahren zum Betreiben einer Förderbandanlage mit
a. einem ersten Förderband (2);
b. einer Schurre (3); und
c. einem zweiten Förderband (12);
umfassend die Schritte
d. Zuführen von Fördermaterial zur Schurre (3) mittels des ersten Förderbands;
e. Wegtransportieren des Fördermaterials mittels des zweiten Förderbands;
f. Messen einer auf die Schurre (3) wirkenden Kraft, insbesondere Gewichtskraft, mittels einer Messeinrichtung;
g. Steuern, insbesondere Regeln, einer Geschwindigkeit oder eines Antriebs des ersten Förderbands in Abhängigkeit von der Kraft.

9. Verfahren nach Anspruch 8, ferner umfassend Bestimmen eines Gewichts der Schurre (3) aus der gemessenen Kraft, insbesondere eines Gewichts der Schurre inklusive gegebenenfalls sich auf oder in dieser befindenden Fördermaterials.

10. Verfahren nach einem der Ansprüche 8 bis 9, **dadurch gekennzeichnet, dass** das erste Förderband gestoppt wird, wenn die Kraft und/oder das Gewicht einen vorgegebenen ersten Wert überschreitet, insbesondere während einer vorgegebenen Zeitdauer *T*_{stop,} vorzugsweise in einem Bereich zwischen 0,5s und 5,0s, d.h. 0,5s ≤ *T*ₛₜₒₚ ≤ 5,0s.

11. Verfahren nach Anspruch 10, **dadurch gekennzeichnet, dass** eine Geschwindigkeit des zweiten Förderbands (12) verringert wird, insbesondere das zweite Förderband (12) gestoppt wird, wenn die Kraft und/oder das Gewicht den ersten oder einen vorgegebenen zweiten Wert überschreitet, insbesondere während einer vorgegebenen zweiten Zeitdauer *T*_{*s*top,2}; wobei vorzugsweise *T*_{stop,} ≈ *T*_{stop,2}.

12. Verfahren nach einem der Ansprüche 8 bis 11, ferner umfassend Bestimmen eines Streuungsmasses *S*, insbesondere einer zeitlichen Varianz, der Kraft, insbesondere über einen Zeitraum Δ*t,* vorzugsweise mit 0,1s < Δ*t* < 3,0s.

13. Verfahren nach Anspruch 12 in Verbindung mit einem der Ansprüche 10 oder 11, ferner umfassend Anpassen der vorgegebenen Zeitdauer *T*ₛₜₒₚ in Abhängigkeit von dem Streuungsmass *S*, insbesondere der zeitlichen Varianz, der Kraft und/oder des Gewichts, wobei vorzugsweise für ein erstes Streuungsmass *S₁* und ein zweites Streuungsmass *S₂* mit *S₂* > *S₁* die Zeitdauer *T*ₛₜₒₚ(*S₂*) für *S₂* kleiner gewählt wird als die Zeitdauer *T*ₛₜₒₚ(*S₁*) für *S₁*, wobei vorzugsweise *T*ₛₜₒₚ(*S₂*) < *T*ₛₜₒₚ(*S₁*).

14. Verfahren nach einem der Ansprüche 12 oder 13, ferner umfassend Bestimmen eines Betriebszustandes der Förderbandanlage, insbesondere des ersten Förderbands, wobei davon ausgegangen wird, dass die Förderbandanlage
a. nicht in Betrieb ist, wenn das Streuungsmass *S*, insbesondere die Varianz, kleiner ist als ein vorgegebener erster Grenzwert;
b. in Betrieb ist, aber kein Fördermaterial transportiert, wenn das Streuungsmass *S*, insbesondere die Varianz, grösser ist als der erste Grenzwert, aber kleiner ist als ein vorgegebener zweiter Grenzwert;
c. in Betrieb ist und Fördermaterial transportiert, wenn das Streuungsmass *S*, insbesondere die Varianz, grösser ist als der zweite Grenzwert.

15. Verfahren nach einem der Ansprüche 12 bis 14, wobei eine Geschwindigkeit des ersten und/oder zweiten Förderbands verringert wird, wenn das Streuungsmass *S*, insbesondere die Varianz, grösser ist als ein erster Grenzwert, aber kleiner ist als ein zweiter Grenzwert; wobei das zweite Förderband insbesondere gestoppt wird.
